# EUROPEAN PATENT APPLICATION

(11) **EP 4 825 208 A1**
(43) Date of publication of application: **21.10.2026**
(21) Application number: 23961463.9
(22) Date of filing: 13.12.2023
(51) Int. Cl.: A24F 40/40, A24F 40/95

(54) **AEROSOL GENERATION DEVICE**

(71) Applicant: Japan Tobacco Inc., Tokyo 105-6927 (JP)
(72) Inventor: ARADACHI, Takao, Tokyo 130-8603 (JP); AOYAMA, Tatsunari, Tokyo 130-8603 (JP)
(74) Representative: Hoffmann Eitle
(86) International application number: PCT/JP2023/044710
(87) International publication number: WO 2025/126397

(57) **Abstract**

This inhalation device for generation an aerosol by heating an aerosol source comprises: a power source unit (111) configured to be capable of supplying power to a heating unit (121) for heating the aerosol source and to be chargeable by means of power received from an external power source; a main body side board unit (90) on which an MCU (1161) controlling the supply of power to the heating unit (121) is mounted; and a case having a power source accommodating portion housing the power source unit (111), and a board accommodating portion housing the main body side board unit (90). The power source unit (111) includes a battery (1111), a charging terminal (1117) configured to be able to receive power from the external power source, and a charging IC (1116) for controlling charging of the battery (1111) by means of power received by the charging terminal (1117).

## Description

### TECHNICAL FIELD

The present disclosure relates to an aerosol generation device.

### BACKGROUND ART

Aerosol generation devices that generate an aerosol to which a flavor component has been added and enable a user to inhale the generated aerosol, for example, are conventionally known. Such aerosol generation devices typically generate an aerosol by heating an aerosol source using a heating unit, which is an electrical resistance type or inductive heating type heater.

The battery of the aerosol generation device degrades with age and usage. In PTL 1 below, an electronic cigarette device is disclosed which allows the battery to be replaced. It is also described in PTL 2 below that a battery supported by a battery support is arranged to oppose a substrate exposed in a case.

### CITATION LIST

### PATENT LITERATURE

PTL 1: CN 107373765 A
PTL 2: JP 2022-524791 A

### SUMMARY OF INVENTION

### PROBLEM TO BE SOLVED BY THE INVENTION

However, the history of research and development into aerosol generation devices is still at an early stage, and there is room for improvement from the perspective of improving user convenience.

The present disclosure provides an aerosol generation device with improved user convenience.

### SOLUTION TO PROBLEM

The present disclosure relates to
an aerosol generation device for generating an aerosol by heating an aerosol source, the aerosol generation device comprising:
a power source unit configured to be capable of supplying power to a heating unit for heating the aerosol source and to be chargeable by means of power received from an external power source;
a board on which a plurality of electronic components including a first control element controlling the supply of power to the heating unit is mounted; and
a case having a power source accommodating portion housing the power source unit, a connection portion electrically connecting the power source unit housed in the power source accommodating portion and the electronic components, and a board accommodating portion housing the board, wherein
the power source unit further comprises
is configured by fixing together a battery, a power receiving unit configured to be able to receive power from the external power source, and a connection terminal electrically connectable to the connection portion, and removably arranging the power source unit in the power source accommodating portion in the fixed together state.

### ADVANTAGEOUS EFFECTS OF INVENTION

The present disclosure makes it possible to provide an aerosol generation device capable of providing improved user convenience.

### BRIEF DESCRIPTION OF DRAWINGS

Fig. 1 is a schematic diagram illustrating a first configuration example of an inhalation device.
Fig. 2 is a schematic diagram illustrating a second configuration example of an inhalation device.
Fig. 3 is a diagram showing an example of the external configuration of the inhalation device 100.
Fig. 4 is a diagram showing a first example of an insertion/removal aspect of the power source unit 111.
Fig. 5 is a diagram showing a second example of the insertion/removal aspect of the power source unit 111.
Fig. 6 is a diagram showing a third example of the insertion/removal aspect of the power source unit 111.
Fig. 7 is a diagram showing a fourth example of the insertion/removal aspect of the power source unit 111.
Fig. 8 is a diagram showing a configuration example of the power source unit 111.
Fig. 9 is a diagram showing another configuration example of the power source unit 111.

### EMBODIMENTS OF THE INVENTION

An embodiment of an aerosol generation device according to the present disclosure will be described in detail below with reference to the drawings. The drawings shall be viewed in the orientation of the reference signs. The embodiment described below is an exemplary case in which the aerosol generation device according to the present disclosure is applied to an inhalation device. It should be noted that not all of the features described in the following embodiment are essential for the aerosol generation device of the present disclosure. In addition, two or more of the plurality of features described in the following embodiment may be combined in any way. Furthermore, hereinafter, identical or similar elements may be assigned identical or similar reference signs, and descriptions thereof may be omitted or simplified as appropriate.

### 1. Configuration example of inhalation device

The inhalation device, which is one example of the aerosol generation device of the present disclosure, is a device for generating a substance to be inhaled by a user. Hereinafter, the substance generated by the inhalation device will be described as being an aerosol. Alternatively, the substance generated by the inhalation device may be a gas.

### <1-1. First configuration example of inhalation device>

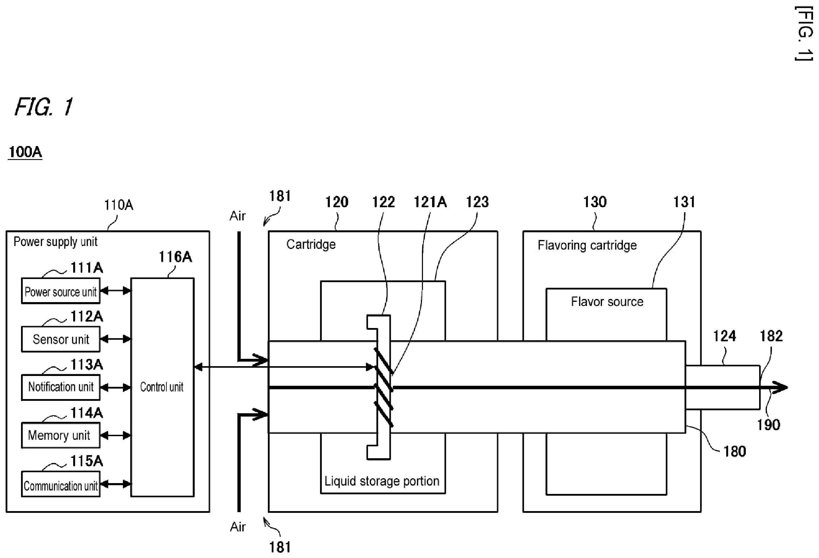

Fig. 1 is a schematic diagram schematically showing a first configuration example of the inhalation device. As shown in fig. 1, an inhalation device 100A according to this configuration example includes a power source unit 110A, a cartridge 120, and a flavoring cartridge 130. The power source unit 110A comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 comprises a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source. The external power source may for example be an AC adapter (AC: alternating current), a mobile charger, a PC (personal computer), or the like. The power source unit 111A may be configured, for example, by a rechargeable battery such as a lithium ion secondary battery.

The cartridge 111A is insertable in and removable from the power source unit 110A. That is, the inhalation device 100A enables the user to replace the power source unit 111A, such as by removing an old power source unit 111A and installing a new power source unit 111A. It should be noted that specific configuration examples of the power source unit 111 including the power source unit 111A will be discussed hereinafter, and will therefore not be described here.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") for detecting a change in pressure (also referred to hereinafter as "internal pressure") in the inhalation device 100A caused by inhalation by the user. As another example, the sensor unit 112A may include a flow sensor for detecting a flow rate caused by inhalation by the user (hereinafter simply referred to as "flow rate"). As another example, the sensor unit 112A may include a temperature sensor (also referred to as a "puff thermistor") for detecting the temperature of the heating unit 121A or the temperature around the heating unit 121A. In addition, the sensor unit 112A may include a voltage sensor for measuring the terminal voltage of the power source unit 111A, a temperature sensor for measuring the temperature of the power source unit 111A, and the like.

The sensor unit 112A may also include an operation detector to detect an operation by the user. In other words, the sensor unit 112A may also function as an input unit that receives input of information from the user. In this case, the sensor unit 112A may comprise an operation button, an operation switch, a motion sensor, a Hall sensor, and so on.

The notification unit 113A notifies the user of information. The notification unit 113A may, for example, be configured by a light-emitting device that emits light, a display device that displays images, a sound output device that outputs sound, or a vibration device that vibrates, etc. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114A stores various information (e.g., programs and data) for operation of the inhalation device 100A. The memory unit 114A may be configured by a nonvolatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each component (e.g., the heating unit 121A to be described later), and controls charging of the power source unit 111A by means of power received from the external power source. The control unit 116A is realized, for example, by electronic circuitry comprising an IC (Integrated Circuit) such as a Central Processing Unit (CPU) or a microprocessor (also referred to as a "Micro Controller Unit (MCU)"). Also, the control unit 116A may be composed of a single IC or two or more ICs.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1, the heating unit 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity to the heating unit 121A from the power source unit 111A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the flavor source 131 is not limited to a solid, and may equally be a polyhydric alcohol such as glycerol or propylene glycol, or a liquid containing a flavor component such as water, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not depicted) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### <1-2. Second configuration example of inhalation device>

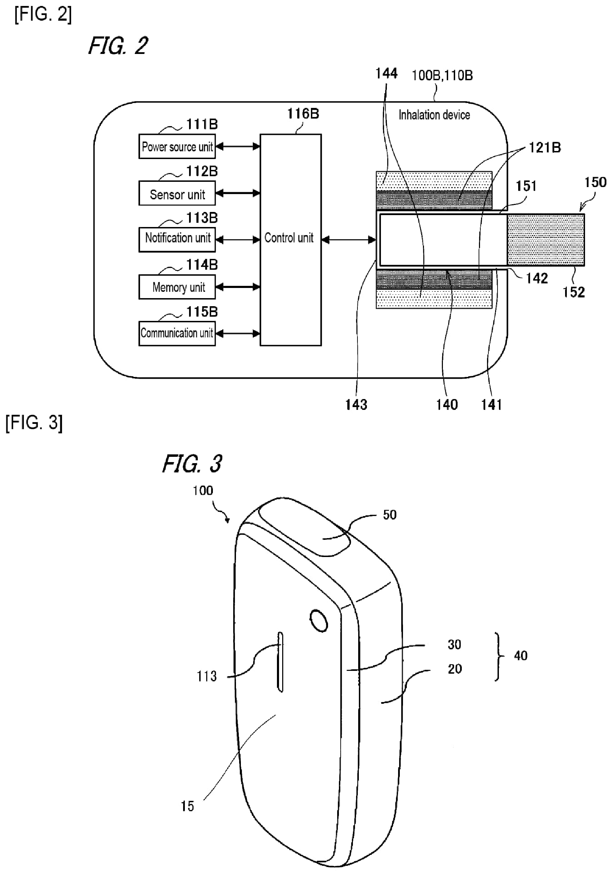

Fig. 2 is a schematic diagram schematically showing a second configuration example of the inhalation device. As shown in fig. 2B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 2B, the inhalation device 100B itself may also be referred to as the power source unit 110B. That is, the power source unit 111B is removably provided to the power source unit 110B (in other words, the inhalation device 100B) such that the user can replace the power source unit 111B as required.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 2, the heating unit 121B is configured as a film heater formed by laying out a conductive track afforded by a heating resistive element having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100", and the power source unit 110A and the power source unit 110B will also be referred to, without distinction, as the "power source unit 110". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### 2. Example of External Configuration of Inhalation Device

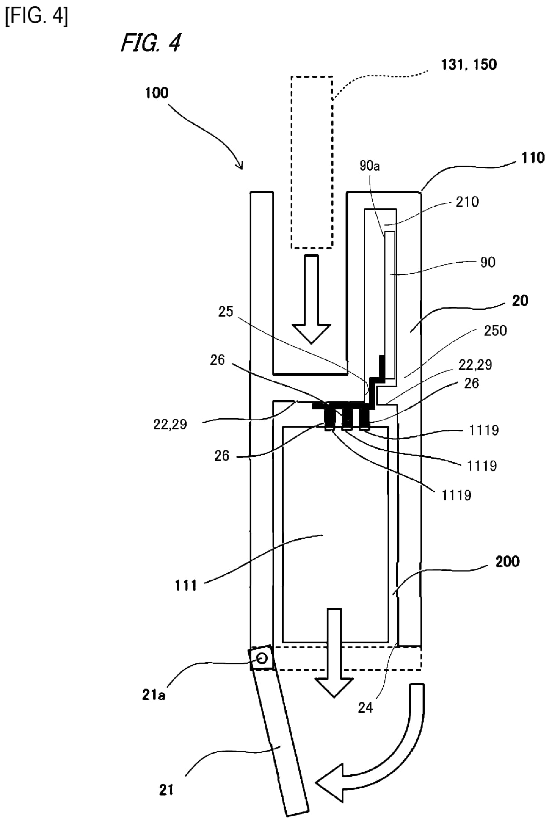

Fig. 3 is a diagram showing an example of the external configuration of the inhalation device 100. As shown in fig. 3, the inhalation device 100 comprises, for example, a case 20, and a shutter 50. The case 20 houses, for example, the power source unit 111 attached to the inhalation device 100 or a main body side board unit 90 (see, for example, figs. 4 to 7).

The main body side board unit 90 housed in the case 20 is configured by mounting various elements (in other words, electronic components) on a board that is, for example, a printed wiring board (PWB). The main body side board unit 90 may be comprised of a single board or two or more boards connected by wires or cables. Also, the board constituting the main body side board unit 90 may be a rigid board, a flexible board, or a combination of these.

The case 20 is also fitted with a panel 30. The panel 30 is attached to the case 20 to configure an outermost housing 40 of the aerosol generation device 100. By including the panel 30, the inhalation device 100 can buffer the heat released to the outside even when the interior of the case 20 generates heat. In other words, the panel 30 functions to insulate heat generated from the interior of the case 20. Furthermore, the panel 30 is formed so that the surface is substantially curved, and defines the internal space together with the surface of the case 20 when attached to the case 20.

When a user presses on the surface of the panel 30 with their fingertips, the panel 30 deforms to form an indentation toward the case 20. As a result of this deformation of the panel 30, a projection provided on the surface of the panel 30 comes into contact with an operation button (not shown on the drawings) provided on the surface of the case 20, thereby pressing the operation button. In other words, the fingertip-pressed portion of the surface of the panel 30 constitutes an operation portion 15 that receives the user's operation. It should be noted that, in fig. 3, the portion denoted by the reference sign 113 is a portion that emits light, for example by transmitting light from a light emitting device provided in the case 20, and is an example of the previously described notification portion 113.

### 3. Insertion and Removal of the Power Source Unit

As previously mentioned, the power source unit 111 is removably provided in the case 20 of the inhalation device 100. Examples of aspects for insertion/removal of the power source unit 111 will now be described in detail. It should be noted that in the inhalation device 100, the insertion and removal direction of the flavor source 131 or the stick-type substrate 150 relative to the inhalation device 100 is the vertical direction, and in the inhalation device 100, the side in which the stick-type substrate 150 is inserted is defined as the upper side. In other words, the flavor source 131 or the stick-type substrate 150 is inserted into the inhalation device 100 from above. Also, the direction perpendicular to the vertical direction may be called the transverse direction, and a surface facing the transverse direction may be called a side surface.

Also, in the following, first to fourth examples of insertion/removal aspects of the power source unit 111 will be described, but the present disclosure is not limited to these examples. In other words, the power source unit 111 may be removably provided in the inhalation device 100 by aspects other than the first to fourth examples described below.

### 3-1. First Example of an Insertion and Removal Aspect of the Power Source Unit

Fig. 4 is a diagram showing a first example of an insertion/removal aspect of the power source unit 111. As shown in fig. 4, the case 20 has a bottom wall portion 21 constituting at least a part of the lower surface of the case 20. The bottom wall portion 21 is provided in the case 20 so that it can be opened and closed about the axis of a hinge 21a that extends in a lateral direction. In other words, the lower surface of the case 20 is provided with an opening 24 configured to be opened and closed by the bottom wall portion 21.

In the lower region of the case 20, a power source accommodating portion 200 is formed that can accommodate the power source unit 111. When the bottom wall portion 21 is opened, the power source accommodating portion 200 is in communication with the outside of the case 20, allowing the power source unit 111 to be inserted into the power source accommodating portion 200 from the opening 24.

Furthermore, a board accommodating portion 210 is formed in the upper region of the case 20. Thus, in the insertion direction of the power source unit 111 inserted through the opening 24, the power source accommodating portion 200 and the board accommodating portion 210 are provided in this order from the opening 24.

The board accommodating portion 210 accommodates the main body side board unit 90 comprising an IC constituting the control unit 116, etc. The main body side board unit 90 is electrically connected to the power source unit 111 accommodated in the power source accommodating portion 200 via a flexible cable 250, etc., for example. This allows power to be supplied from the power source unit 110 accommodated in the power source accommodating portion 200 to the main body side board unit 90.

The case 20 is also provided with a connection portion 26 which is connected to terminals 1119 of the power source unit 111 accommodated in the power source accommodating portion 200. The connection portion 26 electrically connects to the main body side board unit 90 via the flexible cable 250.

In the example shown in fig. 4, the power source unit 111 comprises a plurality of terminals 1119 and a connection portion 26 corresponding to each terminal 1119, provided in the case 20. Furthermore, in the example shown in fig. 4, the terminals 1119 of the power source unit 111 are all provided on an upper surface of the power source unit 111, and thus the connection portions 26 of the case are also all provided to a top wall portion 22 of the power source accommodating portion 200. Note that the plurality of terminals 1119 of the power source unit 111 may include, for example, a first output terminal 1119a and a second output terminal 1119b as described below.

When accommodated in the power source accommodating portion 200, the power source unit 111 is held by the bottom wall portion 21 and the top wall portion 22 of the power source accommodating portion 200. The terminals 1119 of the power source unit 111 are then held electrically connected to the corresponding connection portions 26 provided in the case 20.

The top wall portion 22 is a dividing wall portion arranged between the power source accommodating portion 200 and the board accommodating portion 210 in the insertion direction of the power source unit 111. The top wall portion 22 is arranged between the power source accommodating portion 200 and the board accommodating portion 210 in the insertion direction of the power source unit 111, thereby preventing the power source unit 111 from entering the board accommodating portion 210 and contacting elements arranged on the main body side board unit 90.

Therefore, in the present example, the top wall portion 22 acts as a regulator 29 preventing intrusion of the power source unit 111 into the board accommodating portion 210. In particular, the regulator 29 preferably covers at least the electrical connection of elements arranged on the main body side board unit 90 with the main body side board unit 90, more preferably covers the elements arranged on the main body side board unit 90, and even more preferably covers the entire main body side board unit 90, as viewed from the power source accommodating portion 200.

Also in the present example, a communication portion 25 is formed in the top wall portion 22 in communication between the power source accommodating portion 200 and the board accommodating portion 210, and the flexible cable 250 is inserted through the communication portion 25. Although the top wall portion 22 may be provided with the communication portion 25 in communication between the power source accommodating portion 200 and the board accommodating portion 210, the area of the communication portion 25 perpendicular to the insertion direction of the power source unit 111 is smaller than the area of the power source unit 111 perpendicular to the insertion direction of the power source unit 111. This prevents the power source unit 111 from entering the board accommodating portion 210 via the communication portions 25 and contacting elements arranged on the main body side board unit 90.

As an example, the main body side board unit 90 is mounted with a plurality of elements and electrical connections of the flexible cable 250 on a first surface 90a of the board, the first surface 90a being arranged in a direction perpendicular to the insertion direction of the power source unit 111. Furthermore, by arranging the board in a position that does not overlap with the position of the communication portion 25 from the direction of insertion of the power source unit 111, the mounting portions (in other words, the electrical connections) of the elements mounted on the board are arranged so as not to be exposed to the power source accommodating portion 200. In other words, a portion of the regulator 29 is arranged between at least the power source accommodating portion 200 and the mounting portion of the elements from the direction of insertion of the power source unit 111. In particular, preferably the mounting portion of the mounted element controlling the supply of power to the heating unit 121 (for example, an MCU 1161, described below) is arranged not to be exposed to the power source accommodating portion 200. In this way, safety can be increased because the power source unit 111 is prevented from being in contact with the control element controlling the supply of power to the heating unit 121. Furthermore, preferably not only the mounting portion of the element mounted on the board, but the entire element is arranged so that it is not exposed to the power source accommodating portion 200. In this case, when attempting to receive the power source unit 111, the main body side board unit 90 is not exposed to the user and the connection portion 26 is exposed.

In the example shown in fig. 4, when the bottom wall portion 21 is opened with the power source unit 111 accommodated in the power source accommodating portion 200, the power source accommodating portion 200 is in communication with the outside of the case 20, allowing the power source unit 111 to be removed from the power source accommodating portion 200.

### 3-2. Second Example of an Insertion and Removal Aspect of the Power Source Unit

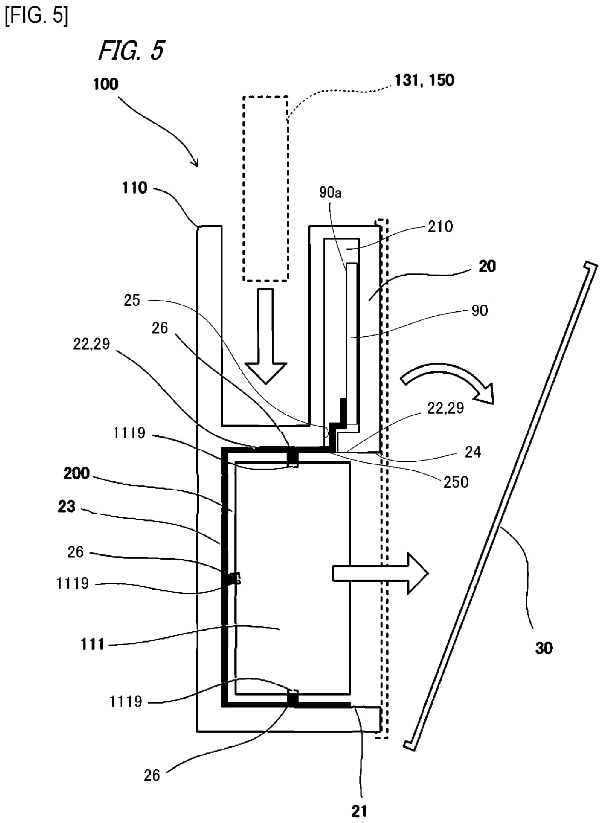

Fig. 5 is a diagram showing a second example of an insertion/removal aspect of the power source unit 111. Note that, in this section, the focus is on the areas that differ from those described in fig. 4, and the areas that are common to those described in fig. 4 will be omitted or simplified as appropriate.

In the example shown in fig. 5, when the previously described panel 30 is removed from the case 20, the power source accommodating portion 200 is in communication with the outside of the case 20, allowing the power source unit 111 to be inserted into the power source accommodating portion 200 from the transverse direction of the case 20. In other words, the opening 24 is provided on a side surface of the case 20 and the opening 24 is configured to be opened and closed with the panel 30.

As the opening 24 is provided in the side surface of the case 20, the board accommodating portion 210 is not located in the insertion direction of the power source unit 111 inserted through the opening 24.

In the example shown in fig. 5, terminals 1119 of the power source unit 111 are provided on each of the top, bottom and side faces of the power source unit 111. For this reason, the connection portions 26 of the case 20 are also provided on each of the top wall portion 22, the bottom wall portion 21 and a side wall portion 23. Note that the terminals 1119 of the power source unit 111 may be arranged aggregated in one place on the power source unit 111, as shown in fig. 4, and the connection portions 26 on the case 20 may also be aggregated in one place on the case 20 to correspond to this.

Since the board accommodating portion 210 is not located in the insertion direction of the power source unit 111 inserted from the opening 24, the power source unit 111 does not typically enter the board accommodating portion 210. However, when the power source unit 111 is inserted at an angle from the opening 24, a portion of the power source unit 111 may enter the board accommodating portion 210, but the top wall portion 22 arranged between the power source accommodating portion 200 and the board accommodating portion 210 as viewed from the power source accommodating portion 200 restricts contact by the power source unit 111 with the electrical connection between the elements arranged on the main body side board unit 90 and the main body side board unit 90. In this example, the top wall portion 22 acts as a regulator 29 preventing intrusion of the power source unit 111 into the board accommodating portion 210.

In the example shown in fig. 5, when the panel 30 is removed from the case 20 with the power source unit 111 accommodated in the power source accommodating portion 200, the power source accommodating portion 200 is in communication with the outside of the case 20, and the power source unit 111 can be removed from the power source accommodating portion 200. Note that the panel 30 may be opened and closed about a hinge portion as described in fig. 4.

### 3-3. Third Example of an Insertion and Removal Aspect of the Power Source Unit

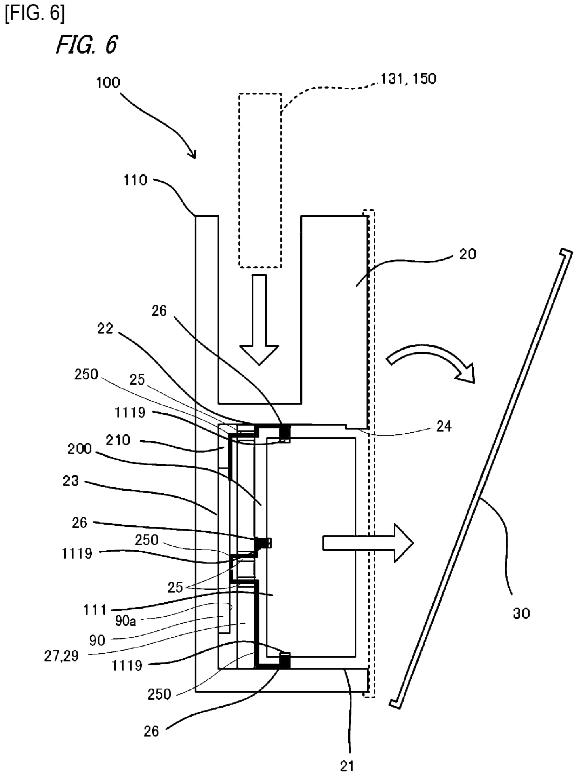

Fig. 6 is a diagram showing a third example of an insertion/removal aspect of the power source unit 111. Note that the focus here is on the areas that differ from those described in fig. 4 or 5, and the areas that are common to those described in fig. 4 or 5 will be omitted or simplified as appropriate.

In the example shown in fig. 6, similar to the example shown in fig. 5, the opening 24 is provided on a side surface of the case 20, and the opening 24 is configured so that it can be opened and closed with the panel 30. On the other hand, unlike the example shown in fig. 5, in the insertion direction of the power source unit 111 inserted from the opening 24, the power source accommodating portion 200 and the board accommodating portion 210 are provided in this order from the opening 24. A dividing wall portion 27 is arranged between the power source accommodating portion 200 and the board accommodating portion 210 in the insertion direction of the power source unit 111.

In the example shown in fig. 6, terminals 1119 of the power source unit 111 are provided on each of the top, bottom and side faces of the power source unit 111. For this reason, the connection portions 26 of the case 20 are also provided in each of the top wall portion 22, bottom wall portion 21, and dividing wall portion 27. Note that the terminals 1119 of the power source unit 111 may be arranged aggregated in one place on the power source unit 111, as shown in fig. 4, and the connection portions 26 on the case 20 may also be aggregated in one place on the case 20 to correspond to this.

The dividing wall portion 27 may be provided integrally with the case 20, or provided separately from the case 20 and attached to the case 20, but when the power source unit 111 is replaced, it is arranged fixed to the case 20. When the power source unit 111 is replaced, the power source unit 111 is prevented from entering the board accommodating portion 210 and coming into contact with elements arranged on the main body side board unit 90. In this example, the dividing wall portion 27 acts as a regulator 29 preventing intrusion of the power source unit 111 into the board accommodating portion 210.

The communication portion 25 is formed in the dividing wall portion 27 in communication between the power source accommodating portion 200 and the board accommodating portion 210, and the flexible cable 250 extends from the connection portion 26 through the communication portion 25 and is connected to the main body side board unit 90. In addition to the through-hole through which the flexible cable 250 is inserted, the dividing wall portion 27 may be provided with communication portions 25 such as through-holes, gaps, cut-outs, or the like. However, the area of the communication portions 25 orthogonal to the insertion direction of the power source unit 111 is smaller than the area of the power source unit 111 orthogonal to the insertion direction of the power source unit 111. This prevents the power source unit 111 from entering the board accommodating portion 210 via the communication portions 25 and contacting elements arranged on the main body side board unit 90.

The dividing wall portion 27 preferably covers at least the electrical connections of elements arranged on the first face 90a of the main body side board unit 90 with the main body side board unit 90, as viewed from the opening 24, more preferably covers the elements arranged on the main body side board unit 90, and even more preferably covers the entire main body side board unit 90. By covering at least the connections between the board and elements arranged on the main body side board unit 90, the generation of short circuits is prevented when the power source unit 111 is replaced.

In the example shown in fig. 6, when the panel 30 is removed from the case 20 with the power source unit 111 accommodated in the power source accommodating portion 200, the power source accommodating portion 200 is in communication with the outside of the case 20, and the power source unit 111 can be removed from the power source accommodating portion 200. Note that the panel 30 may be opened and closed about a hinge portion as described in fig. 4.

### 3-4. Fourth Example of an Insertion and Removal Aspect of the Power Source Unit

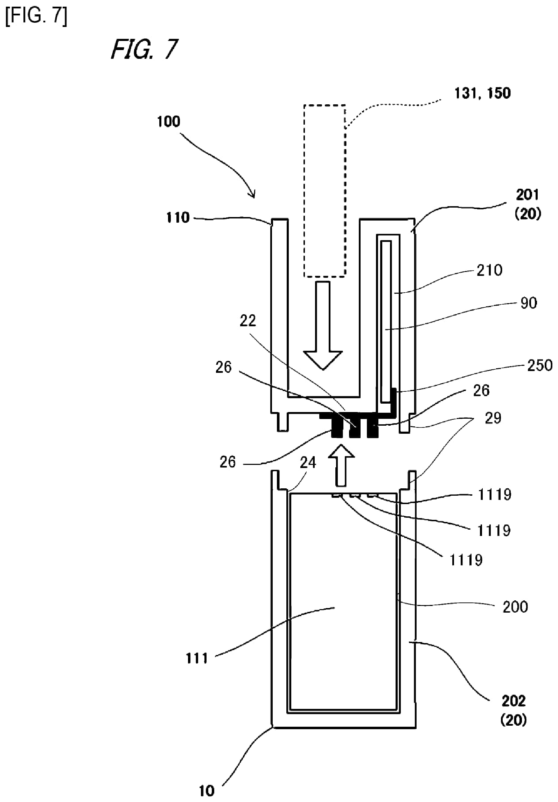

Fig. 7 is a diagram showing a fourth example of an insertion/removal aspect of the power source unit 111. Note that, in this section, the focus is on the areas that differ from those described in fig. 4-6, and the areas that are common to those described in fig. 4-6 will be omitted or simplified as appropriate.

In the example shown in fig. 7, the case 20 comprises a top case 201 constituting the outer packaging of the upper region in the inhalation device 100 and a bottom case 202 constituting the outer packaging of the lower region in the inhalation device 100.

The bottom case 202 is provided with an opening 24 in the upper surface and the power source unit 111 is received in the internal power source accommodating portion 200. In this way, in the example shown in fig. 7, the power source unit 111 and the bottom case 202 are a modularized power source unit 10.

The power source unit 10 is attached to the top case 201 from below. By way of example, both the top case 201 and the bottom case 202 have a substantially cylindrical shape extending vertically, a threaded groove is machined into the outer peripheral surface of one among the lower end of the top case 201 and the upper end of the bottom case 202, and an inner peripheral surface of the other among the lower end of the top case 201 and the upper end of the bottom case 202, and the lower end of the top case 201 and upper end of the bottom case 202 are screwed together, thereby attaching the power source unit 10 to the top case 201.

As another example, a magnet may be provided at one among the lower end of the top case 201 and the upper end of the bottom case 202, the other among the lower end of the top case 201 and the upper end of the bottom case 202 may be formed by a ferromagnetic material, and the lower end of the top case 201 and the upper end of the bottom case 202 may be attracted by the magnetic force of the magnet ,thereby attaching the power source unit 10 to the top case 201. As yet another example, the bottom case 202 may have a locking portion such as a claw, and the power source unit 10 may be attached to the top case 201 by the locking portion locking the top case 201.

With the power source unit 10 attached to the top case 201, the power source unit 111 is held in a state in which the terminals 1119 are electrically connected to the connection portions 26 of the case 20.

When the lower end of the top case 201 and the upper end of the bottom case 202 are screwed together, the power source unit 111 modularized in the bottom case 202 is restricted from entering the board accommodating portion 210 of the top case 201. In this case, the assembly structure of the top case 201 and the bottom case 202 restricts the power source unit 111 from entering the board accommodating portion 210 and contacting elements arranged on the main body side board unit 90, and thus the assembly structure of the top case 201 and the bottom case 202 serves as a regulator 29 that prevents the power source unit 111 from entering the board accommodating portion 210. Meanwhile, if movement of the power source unit 111 is permitted even when the lower end of the top case 201 and the upper end of the bottom case 202 screw together, the top wall portion 22 functions as the regulator 29 that prevents the power source unit 111 from entering the board accommodating portion 210.

Although the top wall portion 22 may be provided with the communication portion 25 in communication between the power source accommodating portion 200 and the board accommodating portion 210, the area of the communication portion 25 perpendicular to the insertion direction of the power source unit 111 is smaller than the area of the power source unit 111 perpendicular to the insertion direction of the power source unit 111. This prevents the power source unit 111 from entering the board accommodating portion 210 via the communication portions 25 and contacting elements arranged on the main body side board unit 90.

In the example shown in fig. 7, when screwing of the lower end of the top case 201 and the upper end of the bottom case 202 is released with the power source unit 111 accommodated in the power source unit 10, the power source accommodating portion 200 is in communication with the outside of the case 20, allowing the power source unit 111 to be removed from the power source accommodating portion 200.

### 4. Configuration Example of the Power Source Unit

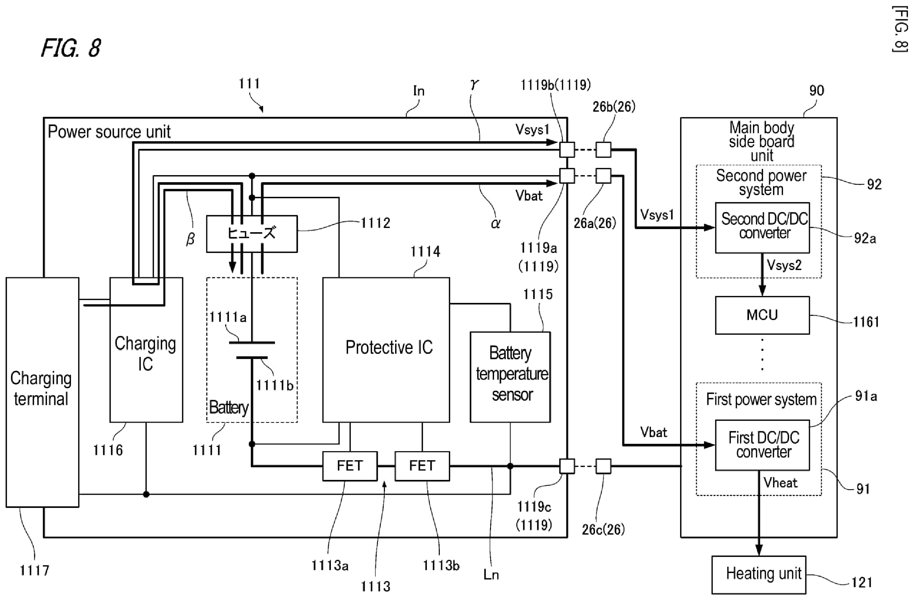

Fig. 8 is a diagram showing a configuration example of the power source unit 111. The power line Ln shown in fig. 8 is a power line to which a reference potential (also referred hereinafter as "ground potential") is applied. Hereinafter, the power line Ln will also be referred to as the "ground line Ln," and being electrically connected to the ground line Ln is also referred to as "being grounded." Furthermore, unless explicitly stated otherwise, hereinafter ground potential is taken to be 0[V], and voltages are assumed to mean the potential difference from the ground potential.

As shown in fig. 8, the power source unit 111 comprises, for example, a battery 1111, a fuse 1112, switch circuitry 1113, a protective IC 1114, a battery temperature sensor 1115, and a charging IC 1116.

Furthermore, the power source unit 111 is equipped with a first output terminal 1119a, a second output terminal 1119b, and a ground terminal 1119c as the terminals 1119 (connection terminals) electrically connecting the inside of the power source unit and the outside. The ground terminal 1119c is grounded.

In the example shown in fig. 8, the power source unit 111 is configured by electrically connecting and packaging a plurality of components, including the battery 1111, the fuse 1112, the switch circuitry 1113, the protective IC 1114, the battery temperature sensor 1115, and the charging IC 1116.

Here, packaging means, for example, combining a plurality of components into one package, and fixing them so that their relative positions remain unchanged. Packaging is achieved by, for example, covering the plurality of enclosed components as a single unit with an insulator (insulator) such as a resin.

In the example shown in fig. 8, the plurality of components such as the battery 1111 and the charging IC 1116 are covered as a single unit by an insulator In so that they are not exposed to the outside of the power source unit 111. This enables the plurality of components enclosed in the power source unit 111, such as the battery 1111 and the charging IC 1116, to be protected from static electricity, external noise, and so on. Also, by configuring the power source unit 111 with the plurality of components such as the battery 1111 and the charging IC 1116 as a single unit, replacement of the power source unit 111 enables the plurality of components to be replaced as a single unit, and improves user convenience.

The battery 1111 is a secondary battery comprising a positive terminal 1111a and a negative terminal 1111b, and is configured to be capable of outputting a terminal voltage of around 4[V] between the positive terminal 1111a and the negative terminal 1111b, for example. Hereinafter, the output voltage (i.e. the terminal voltage between the positive terminal 1111a and the negative terminal 1111b) of the battery 1111 is also referred to as the "power supply voltage Vbat". Note that various types of secondary battery such as a lithium-ion secondary battery or a nickel-metal hydride battery, for example, can be employed as the battery 1111.

The positive terminal 1111a of the battery 1111 is connected via the fuse 1112 to each of the first output terminal 1119a of the power source unit 111 and the charging IC 1116. In other words, the first output terminal 1119a is connected to the positive terminal 1111a of the battery 1111. This allows the power source unit 111 to output power having the power supply voltage Vbat from the first output terminal 1119a, as shown by the arrow α in fig. 8. Furthermore, the negative terminal 1111b of the battery 1111 is connected to the ground line Ln.

The fuse 1112 is a protective element that melts when the current flowing is above a predetermined value. By providing such a fuse 1112 between the positive terminal 1111a of the battery 1111 and the first output terminal 1119a of the power source unit 111, overcurrent that is current of a prescribed value or higher can be prevented from being output to outside of the power source unit 111 via the first output terminal 1119a, even if the overcurrent is output from the battery 1111. Furthermore, it is also possible to protect the charging IC 1116 from overcurrent by connecting both the positive terminal 1111a of the battery 1111 and the charging IC 1116 via the fuse 1112, as shown in fig. 8.

The switch circuitry 1113 is a circuit that acts as a switch to turn on and off charging and discharging of the power source unit 111 (more specifically, the battery 1111). In the example shown in fig. 8, the switch circuitry 1113 is configured by connecting in series a first FET 1113a and a second FET 1113b and is provided on the ground line Ln.

The first FET 1113a and second FET 1113b can each be N-channel Metal-Oxide-Semiconductor Field Effect Transistors (MOSFETs), for example. In this case, the source terminal of the first FET 1113a is connected to the negative terminal 1111b, the drain terminal of the first FET 1113a is connected to the drain terminal of the second FET 1113b, and the gate terminal of the first FET 1113a is connected to the protective IC 1114. Also, the source terminal of the second FET 1113b is connected to the ground terminal, and the gate terminal of the second FET 1113b is connected to the protective IC 1114.

The protective IC 1114 is an IC that functions as a control element (in other words, a controller) for controlling the switch circuitry 1113. More specifically, the protective IC 1114 is connected to both the positive terminal 1111a and the negative terminal 1111b of the battery 1111, and is provided to enable the acquisition of the power supply voltage Vbat, which is the output voltage of the battery 1111. The protective IC 1114 then controls the switch circuitry 1113 based on the power supply voltage Vbat.

The protective IC 1114 can turn the first FET 1113a on (in other words, conduction state) or off (in other words, closed state) by controlling the gate voltage of the first FET 1113a. Similarly, the second FET 1113b can be turned on or off by controlling its gate voltage.

As an example, the protective IC 1114 stops charging of the power source unit 111 (in other words, the battery 1111) by turning off the second FET 1113b if the power supply voltage Vbat reaches a predetermined upper limit during charging of the power source unit 111. This makes it possible to prevent overcharging, such as when the power supply voltage Vbat is higher than the predetermined upper limit value but charging continues.

As another example, the protective IC 1114 stops discharging from the power source unit 111 by turning off the first FET 1113a if the power supply voltage Vbat reaches a predetermined lower limit during discharging from the power source unit 111. This makes it possible to prevent over-discharge, such as when the power supply voltage Vbat is lower than the predetermined lower limit value but discharging continues.

Furthermore, the protective IC 1114 may control the switch circuitry 1113 based on the current value of the current flowing through the ground line Ln. As an example, the protective IC 1114 may stop charging of the power source unit 111 by turning off the second FET 1113b when an overcurrent (in other words, a current greater than or equal to a predetermined value) flows through the ground line Ln while charging the power source unit 111. In this way, it is possible to protect the battery 1111, and so on, from an overcurrent if an overcurrent occurs during charging of the power source unit 1111.

As another example, the protective IC 1114 may stop discharging from the power source unit 111 by turning off the first FET 1113a when an overcurrent flows through the ground line Ln during discharging from the power source unit 111. In this way, even if an overcurrent occurs during discharging from the power source unit 111, it is possible to protect the main body side board unit 90, and so on, from the overcurrent.

The protective IC 1114 is also connected to the battery temperature sensor 1115, for example. Here, the battery temperature sensor 1115 is a temperature element that enables the battery temperature Tbat to be measured by outputting a parameter (for example, the electrical resistance value) or a signal relating to the temperature of the power source unit 111 (hereinafter, also referred to as the "battery temperature Tbat"). For example, the battery temperature sensor 1115 may, for example, be an NTC thermistor comprising a resistor having an NTC characteristic, or a PTC thermistor comprising a resistor having a PTC characteristic, and is positioned in close proximity to the battery 1111. In this case, the protective IC 1114 obtains the battery temperature Tbat based on the output value of the battery temperature sensor 1115.

The protective IC 1114 can then control the switch circuitry 1113 based on the battery temperature Tbat. For example, the protective IC 1114 may stop charging of the power source unit 111 by turning off the second FET 1113b when a parameter indicating that the battery temperature Tbat is greater than or equal to a predetermined temperature is output from the battery temperature sensor 1115 during charging of the power source unit 111. This enables charging to be stopped if the power source unit 111 becomes hot during charging, thereby improving safety.

Furthermore, the protective IC 1114 may stop discharging from the power source unit 111 by turning off the first FET 1113a when a parameter indicating that the battery temperature Tbat is greater than or equal to a predetermined temperature is output from the battery temperature sensor 1115 during discharging from the power source unit 111. This enables discharging to be stopped if the power source unit 111 becomes hot during discharging, thereby improving safety.

In this way, the switch circuitry 1113 and the protective IC 1114 function as a protective circuit configured to be able to disable charging and/or discharging of the battery 1111.

The charging IC 1116 is an IC that functions as a charging control element connected to each of a charging terminal 1117 functioning as a power receiving unit configured to be able to receive power from an external power source, and the battery 1111, and controls charging of the battery 1111 (in other words, the power source unit 111) by the power received by the charging terminal 1117. The charging IC 1116 is an example of the second control element of the present disclosure.

The charging terminal 1117 can, for example, be realized by a receptacle configured to allow insertion of a USB Type-C (registered trademark) plug. The charging terminal 1117 being a receptacle configured to allow insertion of a USB Type-C plug allows widespread chargers to be connected to the power source unit 111 as an external power source. This allows the power source unit 111 to be easily charged at various locations, improving user convenience.

Note that the charging terminal 1117 is not limited to a receptacle that complies with USB Type-C, and may be a receptacle that complies with other standards, such as microUSB or Lightning (registered trademark). Furthermore, here, the charging terminal 1117, which is a receptacle, was adopted as the power receiving unit, but the power receiving unit can also be configured by a power receiving coil or the like configured to be capable of contactlessly receiving power delivered from the external power source.

When the charging IC 1116 detects that the power source unit 111 is connected to an external power source, the charging IC charges the power source unit 111 by supplying power received from the external power source to the battery 1111 as shown by the arrow β in fig. 8. At this time, the power source unit 111 need not be attached to the inhalation device 100.

In other words, the power source unit 111 comprises the charging terminal 1117 in addition to the battery 1111, and thus it is possible for the power source unit to perform charging independently even when removed from the inhalation device 100 (more specifically, the case 20). Thus, if the user has more than one power source unit 111, it is possible to remove and charge one power source unit 111 from the inhalation device 100 while attaching and using the other power source unit 111 to the inhalation device 100. Thus, while charging the one power source unit 111, the inhalation device 100 can be used as usual, and user convenience can be improved. Furthermore, if the power source unit 111 is configured to also comprise the charging IC 1116, the power source unit can be properly charged alone even when removed from the inhalation device 100.

Also, the charging terminal 1117 is configured to be connectable to an external power source externally, for example with the power source unit 111 housed in the power source accommodating portion 200. More specifically, for example, in the case 20, a portion corresponding to the charging terminal 1117 of the power source unit 111 housed in the power source accommodating portion 200 is opened, via which the plug is configured to be insertable into the charging terminal 1117. In this way, the power source unit 111 can be charged without removal from the case 20. This can improve the convenience of a user wishing to charge the inhalation device 100 with the power source unit 111 attached.

Also preferably, the charging IC 1116 controls the current value of the charging current (also referred hereinafter simply as "charging current") supplied to the battery 1111 when charging. As an example, the charging IC 1116 preferably varies the charging current in response to the power supply voltage Vbat, for example preferably decreasing (i.e. narrowing) the charging current as the power supply voltage Vbat increases. As another example, the charging IC 1116 preferably varies the charging current according to the battery temperature Tbat, for example preferably decreasing the charging current as the battery temperature Tbat increases.

The charging IC 1116 is also connected to a second output terminal 1119b in addition to the battery 1111. In other words, the second output terminal 1119b is connected to the positive terminal 1111a of the battery 1111 via the charging IC 1116. The charging IC 1116 is then configured to allow output from the second output terminal 1119b. More specifically, as shown by the arrow γ in fig. 8, the charging IC 1116 causes the power input from the battery 1111 (in other words the power of the power supply voltage Vbat) to be output from the second output terminal 1119b as a first system voltage Vsys1. This allows the power source unit 111 to output the power of the battery 1111 from the first output terminal 1119a as-is, and the power output from the charging IC 1116 can be output from the second output terminal 1119b. This allows the power of the battery 1111 and the power controlled by the charging IC 1116 to be separately supplied to the inhalation device 100. It should be noted that the charging IC 1116 may output the voltage input from the battery 1111 from the second output terminal 1119b as-is, or may step-up or step-down the voltage in the charging IC 1116 and output the voltage.

Here, the first system voltage Vsys1 is a voltage greater than 0. Note that the first system voltage Vsys1 may be a different voltage than the power supply voltage Vbat or may be the same voltage.

Also, when the power source unit 111 is received in the power source accommodating portion 200, the first output terminal 1119a of the power source unit 111 is, for example, connected to a first connection portion 26a which is connected to a first power system 91 which supplies power to the heating unit 121.

More specifically, for example, the first power system 91 comprises a first DC/DC converter 91a mounted on a board constituting the main body side board unit 90, and the first connection portion 26a is connected to the first DC/DC converter 91a. The first DC/DC converter 91a is thereby supplied with the power output from the first output terminal 1119a (i.e., the power at the power supply voltage Vbat). The first DC/DC converter 91a then generates, from the supplied electrical power, power at a heater voltage Vheat suitable for heating by the heating unit 121.

The power of a heater voltage Vheat generated by the first DC/DC converter 91a is supplied to the heating unit 121 (for example, a heating resistor constituting the heating unit 121), thereby causing heating by the heating unit 121. Note that the heater voltage Vheat is, for example, a higher voltage than the power supply voltage Vbat, and can be 5[V] to name one example. This makes it possible to efficiently perform heating by the heating unit 121. The first power system 91 may also further comprise various elements such as switches (e.g., FETs), in addition to the first DC/DC converter 91a. One example may include a switch for powering on and off the heating unit 121 from the first DC/DC converter 91a.

Also, when the power source unit 111 is received in the power source accommodating portion 200, the second output terminal 1119b of the power source unit 111 is, for example, connected to a second connection portion 26b among the connection portions 26 provided to the case 20, which is connected to a second power system 92 which supplies power to the MCU 1161, which is one of the ICs constituting the control unit 116 described above.

The MCU 1161 is an IC mainly configured with a processor that performs various operations, and is a control element that controls the entire inhalation device 100 using a processor executing a pre-prepared program. The MCU 1161 is an example of a first control element controlling the supply of power to the heating unit 121.

More specifically, for example, the second power system 92 comprises a second DC/DC converter 92a mounted on a board constituting the main body side board unit 90, and the second connection portion 26b is connected to the second DC/DC converter 92a. The second DC/DC converter 92a is thereby supplied with the power output from the second output terminal 1119b (i.e., the power of the first system voltage Vsys1). The second DC/DC converter 92a then generates from the supplied power, power at a second system voltage Vsys2 required to operate the MCU 1161.

The second system voltage Vsys2 generated by the second DC/DC converter 92a is supplied to the MCU 1161, thereby actuating the MCU 1161. Note that the second system voltage Vsys2 is, for example, a constant voltage, and can be 3.5[V] to name one example. Keeping the voltage of power supplied to the MCU 1161 constant at the second system voltage Vsys2 enables the MCU 1161 to operate stably. The second power system 92, similarly to the first power system 91, may also further comprise various elements such as switches, in addition to the first DC/DC converter 91a.

As described above, the provision of the first connection portion 26a connected to the first output terminal 1119a and the second connection portion 26b connected to the second output terminal 1119b allows for the power output from the first output terminal 1119a (in other words, the power of the battery 1111) and the power output from the second output terminal 1119b (in other words, the power controlled by the charging IC 1116) to be received separately. Thus, it is possible for the inhalation device 100 to utilize the power output from the first output terminal 1119a and the power output from the second output terminal 1119b for different applications.

If both power supply from the power source unit 111 to the heating unit 121 and charging of the power source unit 111 are performed at the same time, the power source unit 111 can be in a high load state. When the power source unit 111 is in a high load state, the battery temperature Tbat is high, which is undesirable in terms of reducing degradation of the battery 1111.

Therefore, the charging IC1116 may start charging the battery 1111 (i.e., the power source unit 111) when power supply is not being performed from the power source unit 111 to the heating unit 121 when the power source unit 111 is electrically connected to an external power source, and not start charging the battery 1111 when power supply from the power source unit 111 to the heating unit 121 is being performed when the power source unit 111 is electrically connected to the external power source. In this way, charging of the battery 1111 can be prevented from starting when power supply is being performed from the power source unit 111 to the heating unit 121, and it is possible to inhibit both power supply and charging of the heating unit 121 being performed at the same time to inhibit the power source unit 111 becoming a high load state.

Alternatively, the charging MCU 1161 may instruct the charging IC 1116 to start charging the battery 1111 when power supply is not being performed from the power source unit 111 to the heating unit 121 when the power source unit 111 received in the power source accommodating portion 200 is electrically connected to an external power source, and instruct the charging IC not to start charging the battery 1111 when power supply from the power source unit 111 to the heating unit 121 is being performed when the power source unit 111 received in the power source accommodating portion 200 is electrically connected to the external power source. The charging IC 1116 may then initiate charging of the battery 1111 in response to receiving an instruction from the MCU 1161 to start charging the battery 1111. In this way as well, the charging of the battery 1111 can be prevented from starting when power supply from the power source unit 111 to the heating unit 121 is being performed, and it is possible to inhibit both power supply and charging to the heating unit 121 being performed at the same time and the power source unit 111 becoming a high load state.

Alternatively, the charging IC 1116 may be configured to detect an output from the first output terminal 1119a (in other words, an output of the power supply voltage Vbat) and not charge the battery 1111 when there is an output from the first output terminal 1119a. In this way as well, the battery 1111 can be prevented from being charged when there is an output from the first output terminal 1119a (in other words, the output of the power at the power supply voltage Vbat), and it is possible to inhibit both power supply and charging to the heating unit 121 being performed at the same time and the power source unit 111 becoming a high load state.

The MCU 1161 may also control the charging IC 1116 such that charging of the battery 1111 is performed or not performed depending on the state of the battery 1111 when the power source unit 111 received in the power source accommodating portion 200 is electrically connected to an external power source. As an example, the MCU 1161 may control the charging IC 1116 such that, when the power source unit 111 received in the power source accommodating portion 200 is electrically connected to an external power source, no charging of the battery 1111 is performed when the battery 1111 is in a predetermined state such as over-discharged or deeply discharged, whereas charging of the battery 1111 is performed in other states. That is, the charging IC 1116 may independently control the charging of the battery 1111 when the power source unit 111 is not attached to the power source unit 110 (i.e., the inhalation device 100), whereas with the power source unit 111 attached to the power source unit 110, the charging IC 1116 may control the charging of the battery 1111 according to instructions from the MCU 1161.

It should be noted that the MCU 1161 can determine whether the battery 1111 is in a predetermined state, for example based on the power supply voltage Vbat received by the main body side board unit 90 from the power source unit 111. Also, a remaining charge IC that obtains the remaining charge of the battery 1111 from the power supply voltage Vbat, etc., is provided in the main body side board unit 90, and the MCU 1161 determines whether the battery 1111 is in a predetermined state on the basis of input from the remaining charge IC (e.g., the measurement value itself of the power supply voltage Vbat, etc., or an error signal that can be output from the remaining charge meter IC on the basis thereof).

The power source unit 111 also separates the first output terminal 1119a from which the power of the battery 1111 (in other words, the power of the power supply voltage Vbat) is output and the second output terminal 1119b from which the power of the charging IC 1116 (in other words, the power of the first system voltage Vsys1) is output. As such, it is not necessary to use specifications which assume that the maximum power, such as the power of the power supply voltage Vbat, flows through the charging IC 1116 and/or the power line from the charging IC 1116 to the second output terminal 1119b. Then, by directly connecting the first output terminal 1119a and the battery 1111, the maximum power, such as the power of the power supply voltage Vbat, can be output from the first output terminal 1119a as-is. Also, for example, even if the battery 1111 is in an over-discharged state and the MCU 1161 becomes inoperable due to under-voltage with only discharge from the battery 1111, power supply is performed from the external power source to the MCU 1161 via the charging IC 1116 as long as the power source unit 111 is connected to the external power source, and thus the MCU 1161 can operate and it is possible to maintain various types of control by the MCU 1161. Due to this, even if the battery 1111 is in an over-discharged state, for example, as long as the power source unit 111 is connected to an external power source, the MCU 1161 can control the charging IC 1116 such that charging of the battery 1111 by the MCU 1161 is not performed.

As explained above, according to this embodiment, it is possible to provide the inhalation device 100 with increased user convenience.

An embodiment of an aerosol generation device according to the present disclosure was described above, but it goes without saying that the present disclosure is not limited to such an embodiment. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

For example, in the embodiment described above, the first output terminal 1119a from which the power of the battery 1111 (in other words, the power of the power supply voltage Vbat) is output and a second output terminal 1119b from which the power of the charging IC 1116 (in other words, the power of the first system voltage Vsys1) is output were provided separately in the power source unit 111, but the present invention is not limited to this. Alternatively, for example, it is permissible to provide only the first output terminal 1119a of the first output terminal 1119a and the second output terminal 1119b to separate the power of the supply voltage Vbat and the power of the first system voltage Vsys1 within the main body side board unit 90, with each flowing through a separate power line.

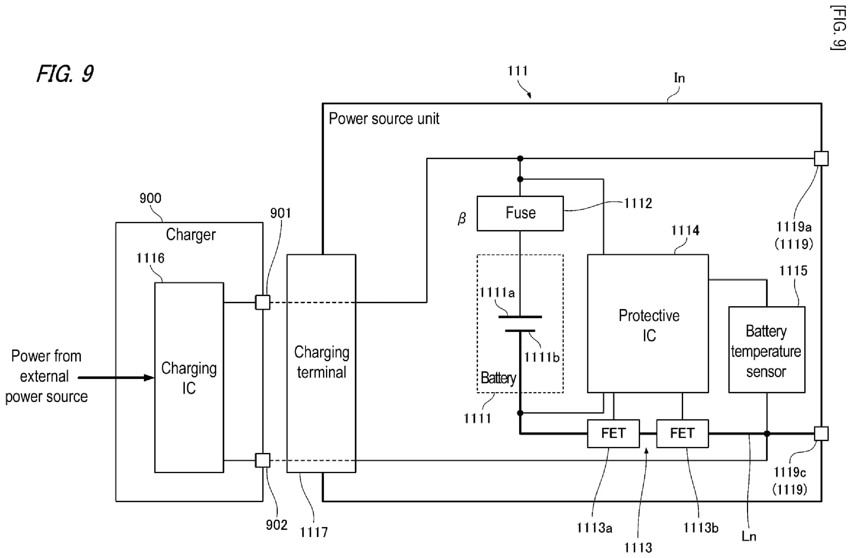

Also, in the embodiment described above, the charging IC 1116 was provided in the power source unit 111, but the present invention is not limited to this. Fig. 9 is a diagram showing another configuration example of the power source unit 111. Note that, in this section, the focus is on the areas that differ from those described in fig. 8, and the areas that are common to those described in fig. 8 will be omitted or simplified as appropriate. It should also be noted that illustration of the main body side board unit 90, etc. is omitted.

As shown in fig. 9, the charging IC 1116 may be provided to a charger 900, for example. In this case, the charger 900 comprises for example an unillustrated input terminal for connection with an external power source (e.g., a commercial power source) in addition to the charging IC1116, and an output terminal 901 and a ground terminal 902 which are connected to a charging terminal 1117 of the power source unit 111. In this case, power from the external power source is input to the charging IC 1116 via the input terminal of the charger 900. The charging IC 1116 then generates, from the input power, power receivable by the power source unit 111 in terms of hardware (e.g., a DC power with a predetermined voltage), and this power is output to the charging terminal 1117 of the power source unit 111 via the output terminal 901. In this way, the power output from the charger 900 is supplied to the battery 1111 of the power source unit 111 to charge the battery 1111. This arrangement also allows the power source unit 111 to be charged independently even when the power source unit 111 is removed from the inhalation device 100 (more specifically the case 20).

The present specification, etc. sets forth at least the following features. Corresponding components, etc. in the embodiments described above are shown by way of example in parentheses, but there is no limitation to such components.

(1) An aerosol generation device (inhalation device 100, 100A, 100B) for generating an aerosol by heating an aerosol source (cartridge 120, flavor source 131, stick-type substrate 150), the aerosol generation device comprising:
a power source unit (power source unit 111, 111A, 111B) configured to be capable of supplying power to a heating unit (heating unit 121, 121A, 121B) for heating the aerosol source and to be chargeable by means of power received from an external power source;
a board (main body side board unit 90) on which a plurality of electronic components including a first control element (MCU 1161) controlling the supply of power to the heating unit is mounted; and
a case (case 20) having a power source accommodating portion (power source accommodating portion 200) housing the power source unit, a connection portion (first connection portion 26A, second connection portion 26b) electrically connecting the power source unit housed in the power source accommodating portion and the electronic components, and a board accommodating portion (board accommodating portion 210) housing the board, wherein
the power source unit
is configured by fixing together a battery, a power receiving unit (charging terminal 117) configured to be able to receive power from the external power source, and a connection terminal (first output terminal 1119a, second output terminal 1119b) electrically connectable to the connection portion, and removably arranging the power source unit in the power source accommodating portion in the fixed together state.

According to (1), the power source unit 111 comprises a power receiving unit in addition to the battery, and thus it is possible for the power source unit to perform charging independently even when removed from the case of the aerosol generation device. Thus, if the user has more two or more of the power source units, it is possible to remove and charge one power source unit from the aerosol generation device while attaching and using the other power source unit to the aerosol generation device. Thus, while charging the one power source unit, the aerosol generation device can be used as usual, and user convenience can be improved.

(2) The aerosol generation device according to (1), wherein
the power source unit further comprises a second control element (charging IC 1116) for controlling charging of the battery by power received by the power receiving unit.

According to (2), the power source unit comprises a second control element, and thus the power source unit can be properly charged alone even when removed from the case of the aerosol generation device.

(3) The aerosol generation device according to (2), wherein
the connection terminal includes
a first output terminal (first output terminal 1119a) connected to the battery, and
A second output terminal (second output terminal 1119b) connected to the battery via the second control element, wherein
the second control element is further configured to be able to control an output from the second output terminal.

According to (3), the power of the battery can be output as-is from the first output terminal, and the power controlled by the second control element can be output from the second output terminal. This allows the power of the battery and the power controlled by the second control element to be separately supplied to the aerosol generation device.

(4) The aerosol generation device according to (2), wherein
the control unit includes
a first connection portion (first connection portion 26a) connected to the first output terminal of the power source unit housed in the power source accommodating portion, and
a second connection portion (first connection portion 26b) connected to the second output terminal of the power source unit housed in the power source accommodating portion.

According to (4), it is possible for the aerosol generation device to separately receive the power output from the first output terminal (in other words, the power of the battery) and the power output from the second output terminal (in other words, the power controlled by the second control element).

(5) The aerosol generation device according to (4), wherein
the first connection portion connects to a first power system (first power system 91) which supplies power to the heating unit, and
the second connection portion connects to a second power system (second power system 92) which supplies power to the first control element.

According to (5), the first power system supplying power to the heating unit can be supplied with the power of the battery as-is, and the second power system supplying power to the first control element can be supplied with power controlled by the second control element.

(6) The aerosol generation device according to any one of (1) to (5), wherein
the power source unit further comprises
a temperature element (battery temperature sensor 1115) outputting a parameter or a signal relating to the temperature of the power source unit, and
a protective circuit (switch circuitry 1113, protective IC 1114) configured to disable charging of the battery, and
the protective circuit disables charging of the battery when the parameter or the signal indicating that the temperature of the power source unit is greater than or equal to a predetermined temperature is output from the battery temperature sensor during charging of the battery.

According to (6), even when the power source unit is being charged alone, the power source unit can be suppressed from becoming a high temperature, and degradation of the battery can be suppressed.

(7) The aerosol generation device according to (6), wherein
the protective circuit further disables charging of the battery when a terminal voltage of the battery reaches a predetermined upper limit value during charging of the battery.

According to (7), even when the power source unit is being charged alone, overcharging of the battery can be suppressed, and degradation of the battery can be suppressed.

(8) The aerosol generation device according to (6) or (7), wherein
the protective circuit
is further configured to be capable of disable discharging from the battery, and
disables discharging from the battery when the parameter or the signal indicating that the temperature of the power source unit is greater than or equal to a predetermined temperature is output from the battery temperature sensor during charging of the battery.

According to (8), the power source unit can be suppressed from becoming a high temperature during discharging of the power source unit, and degradation of the battery can be suppressed.

(9) The aerosol generation device according to (8), wherein
the protective circuit further disables charging of the battery when a terminal voltage of the battery reaches a predetermined lower limit value during discharging of the battery.

According to (9), overdischarge of the battery can be suppressed, and degradation of the battery due to overdischarge can be suppressed.

(10) The aerosol generation device according to any one of (2) to (5), wherein the second control element starts charging of the battery in response to the power source unit being electrically connected to the external power source.

According to (10), charging of the battery can be started when a user connects the power source unit to an external power source, improving user convenience compared to when other operations are also required to charge the battery in addition to connecting the power source unit to the external power source.

(11) The aerosol generation device according to (10), wherein
the second control element
starts charging of the battery when power supply from the power source unit to the heating unit is not being performed when the power source unit is electrically connected to the external power source, and
does not start charging of the battery when power supply from the power source unit to the heating unit is being performed when the power source unit is electrically connected to the external power source.

According to (11), charging of the battery can be prevented from starting when power supply is being performed from the power source unit to the heating unit, and it is possible to inhibit both power supply and charging of the heating unit being performed at the same time and the power source unit becoming a high load state.

(12) The aerosol generation device according to any one of (2) to (5), wherein
the first control element
instructs the second control element to start charging of the battery when power supply from the power source unit to the heating unit is not being performed when the power source unit housed in the power source accommodating portion is electrically connected to the external power source, and
does not instruct charging of the battery to be started when power supply from the power source unit to the heating unit is being performed when the power source unit housed in the power source accommodating portion is electrically connected to the external power source, and
the second control element starts charging the battery in response to receiving the instruction from the first control element to start charging of the battery.

According to (12), charging of the battery can be prevented from starting when power supply is being performed from the power source unit to the heating unit, and it is possible to inhibit both power supply and charging of the heating unit being performed at the same time and the power source unit becoming a high load state.

(13) The aerosol generation device according to any one of (3) to (5), wherein
the second control element detects an output from the fist output terminal, and
does not perform charging of the battery when there is an output from the first output terminal.

According to (13), charging of the battery can be prevented from being performed when there is an output from the first output terminal, and it is possible to inhibit both power supply and charging of the heating unit at the same time, leading to the heat source unit being in a high load state.

(14) The aerosol generation device according to any one of (1) to (13), wherein
the power receiving unit is configured to be externally connectable to the external power source with the power source unit housed in the power source accommodating portion.

According to (14), the power source unit can be charged without removing the power source unit from the case of the aerosol generation device. This can improve the convenience of a user wishing to charge the aerosol generation device with the power source unit attached.

(15) The aerosol generation device according to any one of (1) to (14), wherein
the power receiving unit is a receptacle configured to allow insertion of a plug for supplying power of the external power source.

According to (15), it is possible to connect widespread chargers to the power source unit as an external power source. This allows the power source unit to be easily charged at various locations, improving user convenience.

### REFERENCE SIGNS LIST

20 Case
26a First connection portion (connection portion)
26B Second connection portion (connection portion)
90 Main body side board unit (board)
100, 100A, 100B Inhalation device (aerosol generation device)
111, 111A, 111B power source unit
121, 121A, 121B Heating unit
200 Power source accommodating portion
210 Board accommodation portion
1111 Battery
1113 switch circuitry (protective circuit)
1114 Protective IC (protective circuit)
1115 Battery temperature sensor (temperature element)
1116 Charging IC (second control element)
1119a First output terminal (connection terminal)
1119b Second output terminal (connection terminal)
1161 MCU (first control element)

## Claims

1. An aerosol generation device for generating an aerosol by heating an aerosol source, the aerosol generation device comprising:
a power source unit configured to be capable of supplying power to a heating unit for heating the aerosol source and to be chargeable by means of power received from an external power source;
a board on which a plurality of electronic components including a first control element controlling the supply of power to the heating unit is mounted; and
a case having a power source accommodating portion housing the power source unit, a connection portion electrically connecting the power source unit housed in the power source accommodating portion and the electronic components, and a board accommodating portion housing the board, wherein
the power source unit
is configured by fixing together a battery, a power receiving unit configured to be able to receive power from the external power source, and a connection terminal electrically connectable to the connection portion, and removably arranging the power source unit in the power source accommodating portion in the fixed together state.

2. The aerosol generation device according to claim 1, wherein
the power source unit further comprises a second control element for controlling charging of the battery by power received by the power receiving unit.

3. The aerosol generation device according to claim 2, wherein
the connection terminal includes
a first output terminal connected to the battery, and
a second output terminal connected to the battery via the second control element, and
the second control element is further configured to be able to control an output from the second output terminal.

4. The aerosol generation device according to claim 3, wherein
the control unit includes
a first connection portion connected to the first output terminal of the power source unit housed in the power source accommodating portion, and
a second connection portion connected to the second output terminal of the power source unit housed in the power source accommodating portion.

5. The aerosol generation device according to claim 4, wherein
the first connection portion connects to a first power system which supplies power to the heating unit, and
the second connection portion connects to a second power system which supplies power to the first control element.

6. The aerosol generation device according to any one of claims 1 to 5, wherein
the power source unit further comprises
a temperature element outputting a parameter or a signal relating to the temperature of the power source unit, and
a protective circuit configured to disable charging of the battery, and
the protective circuit disables charging of the battery when the parameter or the signal indicating that the temperature of the power source unit is greater than or equal to a predetermined temperature is output from the battery temperature sensor during charging of the battery.

7. The aerosol generation device according to claim 6, wherein
the protective circuit further disables charging of the battery when a terminal voltage of the battery reaches a predetermined upper limit value during charging of the battery.

8. The aerosol generation device according to claim 6 or 7, wherein
the protective circuit
is further configured to be capable of disable discharging from the battery, and
disables discharging from the battery when the parameter or the signal indicating that the temperature of the power source unit is greater than or equal to a predetermined temperature is output from the battery temperature sensor during charging of the battery.

9. The aerosol generation device according to claim 8, wherein
the protective circuit further disables charging of the battery when a terminal voltage of the battery reaches a predetermined lower limit value during discharging of the battery.

10. The aerosol generation device according to any one of claims 2 to 5, wherein
the second control element starts charging of the battery in response to the power source unit being electrically connected to the external power source.

11. The aerosol generation device according to claim 10, wherein
the second control element
starts charging of the battery when power supply from the power source unit to the heating unit is not being performed when the power source unit is electrically connected to the external power source, and
does not start charging of the battery when power supply from the power source unit to the heating unit is being performed when the power source unit is electrically connected to the external power source.

12. The aerosol generation device according to any one of claims 2 to 5, wherein
the first control element
instructs the second control element to start charging of the battery when power supply from the power source unit to the heating unit is not being performed when the power source unit housed in the power source accommodating portion is electrically connected to the external power source, and
does not instruct charging of the battery to be started when power supply from the power source unit to the heating unit is being performed when the power source unit housed in the power source accommodating portion is electrically connected to the external power source, and
the second control element starts charging the battery in response to receiving the instruction from the first control element to start charging of the battery.

13. The aerosol generation device according to any one of claims 3 to 5, wherein
the second control element detects an output from the fist output terminal, and
does not perform charging of the battery when there is an output from the first output terminal.

14. The aerosol generation device according to any one of claims 1 to 13, wherein the power receiving unit is configured to be externally connectable to the external power source with the power source unit housed in the power source accommodating portion.

15. The aerosol generation device according to any one of claims 1 to 14, wherein the power receiving unit is a receptacle configured to allow insertion of a plug for supplying power of the external power source.
